# FASCICULE DE BREVET EUROPEEN

(11) **EP 1 640 630 B1**
(45) Date de publication et mention de la délivrance du brevet: **02.12.2009**
(21) Numéro de dépôt: 05018349.0
(22) Date de dépôt: 24.08.2005
(51) Int. Cl.: F16D 51/18

(54) **Dispositif de rappel à stabilisation de tension de ressort et application aux freins à tambour**
Rückstellfedervorrichtung mit Federspannungsstabilisierung und Betätigung in einer Trommelbremse
Return spring device with spring tension stabilization and actuation in a drumbrake

(30) Priorité: 22.09.2004 FR 0410036
(43) Date de publication de la demande: 29.03.2006
(73) Titulaire: ROBERT BOSCH GMBH, 70442 Stuttgart (DE)
(72) Inventeur: Dupuis, Vincent, 94100 Saint Maur (FR)
(74) Mandataire: Hurwic, Aleksander Wiktor

(56) Documents cités:
- EP-A- 0 050 946
- PATENT ABSTRACTS OF JAPAN vol. 005, no. 123 (M-082), 8 août 1981 (1981-08-08) & JP 56 063133 A (AKEBONO BRAKE IND CO LTD), 29 mai 1981 (1981-05-29)
- PATENT ABSTRACTS OF JAPAN vol. 004, no. 076 (M-014), 3 juin 1980 (1980-06-03) & JP 55 036649 A (AKEBONO BRAKE IND CO LTD), 14 mars 1980 (1980-03-14)

## Description

L'invention concerne, de façon générale, les dispositifs mécaniques de rappel dont le fonctionnement est soumis à un phénomène d'usure.

Plus précisément, l'invention concerne un dispositif de rappel entre deux éléments mobiles l'un par rapport à l'autre et sélectivement déplacés, suivant un mouvement d'éloignement mutuel, depuis une position de repos vers une position d'éloignement extrême, les positions de repos et d'éloignement extrême étant séparées l'une de l'autre par une distance croissante avec l'usure d'au moins un organe d'usure et ce dispositif comprenant au moins un ressort de rappel reliant les deux éléments mobiles et exerçant sur ces éléments, dans leur position d'éloignement extrême, une force élastique de rappel les sollicitant en rapprochement mutuel vers leur position de repos.

Un tel dispositif est par exemple mis en oeuvre de façon classique, sous une forme réduite au seul ressort de rappel, dans les freins à tambours, auxquels l'invention s'applique de façon privilégiée.

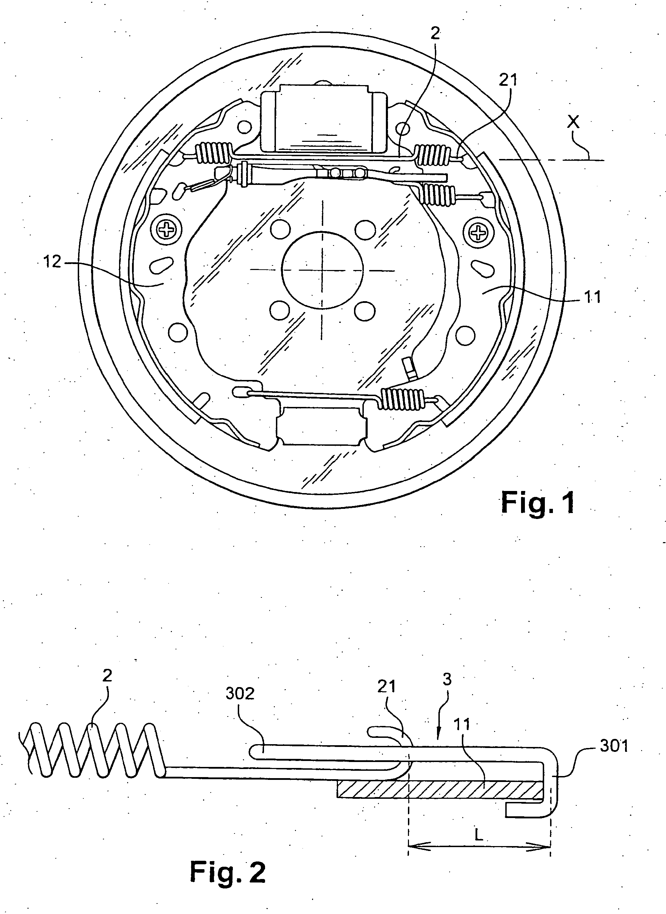

En effet, les freins à tambours connus, du type illustré à la figure 1, comprennent traditionnellement deux segments 11 et 12, qui, lors d'un freinage, sont déplacés depuis leur position de repos vers une position d'éloignement mutuel extrême dans laquelle ils frottent sur un tambour rotatif (non représenté).

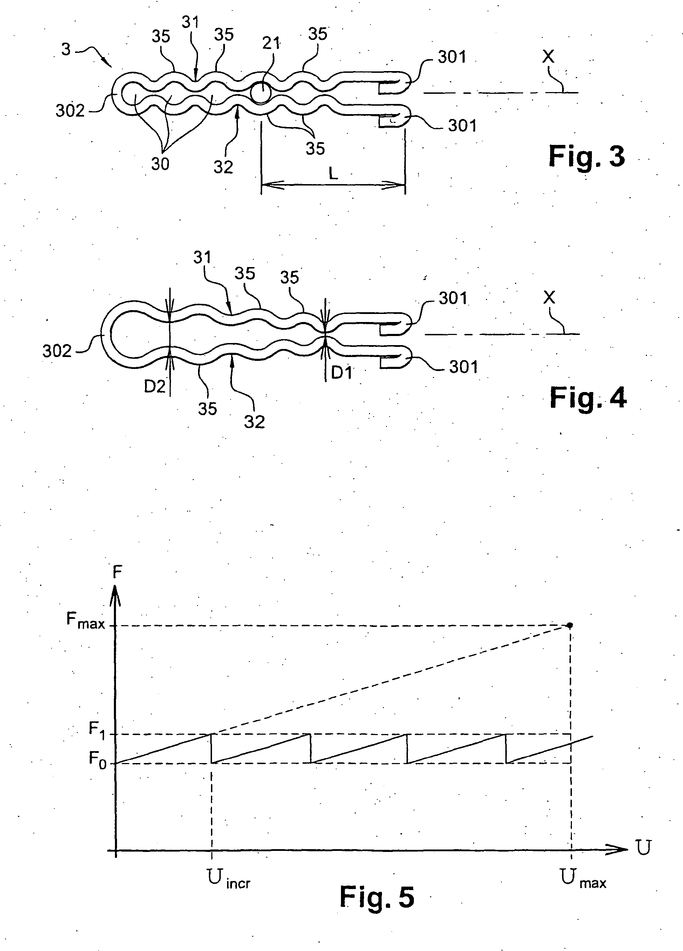

Ce mouvement d'éloignement mutuel des segments 11 et 12 est effectué à l'encontre de la force de rappel élastique F (figure 5) principalement exercée par le ressort de rappel 2 qui relie l'un à l'autre les deux segments 11 et 12.

Cependant, au fur et à mesure qu'augmente l'usure de ces segments et du tambour, exprimée par exemple en millimètres, la position d'éloignement mutuel extrême des segments s'écarte de plus en plus de la position de repos de ces derniers.

Il en résulte qu'en fin de vie des segments 11 et 12 et du tambour, c'est-à-dire lorsque l'usure a atteint une valeur maximale Umax (figure 5), la force de rappel exercée par le ressort 2 sur ces segments atteint une valeur Fmax élevée, et donc indésirable, puisque cette force de rappel vient en déduction de la force exercée pour actionner le frein.

Dans ce contexte, l'invention a pour but de proposer un dispositif de rappel exempt de ce défaut.

Le document JP 560 63 133 révèle le préambule de la revendication 1.

A cette fin, le dispositif de rappel de l'invention, par ailleurs conforme à la définition générique qu'en donne le préambule ci-dessus, est essentiellement caractérisé en ce qu'il comprend en outre une pièce de liaison à relaxation d'effort, montée en série avec le ressort de rappel entre les deux éléments mobiles, et présentant une longueur utile croissante avec l'usure de chaque organe d'usure, cette pièce de liaison subissant un accroissement de sa longueur utile en réponse à un dépassement, par la force élastique de rappel, d'un seuil d'effort prédéterminé.

Dans le mode de réalisation préféré de l'invention, il est par exemple prévu que la pièce de liaison comprenne un guide allongé suivant une première direction joignant les éléments mobiles, que le ressort de rappel présente une première extrémité emprisonnée dans le guide allongé, et que ce guide soit doté d'une succession d'obstacles élastiques saillant transversalement à la première direction, au moins localement inclinés par rapport à cette première direction, et agissant à la manière de cliquets passants, la première extrémité du ressort de rappel progressant dans le guide par sauts successifs des obstacles élastiques à mesure qu'augmente l'usure de chaque organe d'usure.

La pièce de liaison peut être formée par un fil ressort replié en épingle à cheveux pour faire apparaître deux branches en vis-à-vis, les obstacles élastiques étant alors par exemple formés par des ondulations de l'une au moins de ces deux branches.

La pièce de liaison présente avantageusement une première extrémité conformée en crochet et accrochée à l'un des éléments mobiles, la première extrémité du ressort de rappel pouvant également être conformée en crochet.

Si les deux branches de la pièce de liaison portent des ondulations, les obstacles élastiques peuvent être formés par rapprochement et éloignement mutuels et coordonnés des ondulations de ces deux branches.

Dans le cas où la première extrémité de la pièce de liaison formée par le fil ressort est conformée en crochet, cette pièce est de préférence repliée sur elle-même à sa seconde extrémité, opposée à la première, pour ménager les deux branches précédemment mentionnées.

Les ondulations des deux branches peuvent alors présenter entre elles des distances minimales croissantes depuis la première extrémité de la pièce de liaison vers la deuxième extrémité de cette pièce de liaison.

Le dispositif de rappel de l'invention est particulièrement applicable à un frein à tambour équipé de deux segments, chaque segment constituant dans ce cas à la fois un élément mobile et un organe d'usure.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue de face d'un frein à tambour connu ;
- la figure 2 est une vue partielle agrandie de dessus d'un dispositif conforme à l'invention, appliqué à un frein à tambour dont un segment est vu en coupe ;
- la figure 3 est une vue de face et en perspective d'un premier mode de réalisation d'une pièce de liaison utilisable dans un dispositif conforme à l'invention ;
- la figure 4 est une vue de face et en perspective d'un second mode de réalisation d'une pièce de liaison utilisable dans un dispositif conforme à l'invention ; et
- la figure 5 est un diagramme représentant la force de rappel maximale exercée par un ressort de rappel dans un montage de l'art antérieur et dans un dispositif conforme à l'invention.

Comme annoncé précédemment, l'invention concerne un dispositif de rappel entre deux éléments 11 et 12 mobiles l'un par rapport à l'autre et sélectivement déplacés depuis une position de repos jusque dans une position d'éloignement mutuel extrême.

Dans l'application du dispositif de rappel de l'invention aux freins à tambours, qui en représenté l'application privilégiée et qui servira de support à la description détaillée ci-après, les éléments mobiles 11 et 12 sont constitués par les segments de ce frein.

Ce dispositif de rappel comprend un ressort de rappel 2 qui relie ces segments 11 et 12 et qui exerce sur eux, dans leur position d'éloignement extrême, une force élastique de rappel F les sollicitant en rapprochement mutuel vers leur position de repos.

Comme chacun des segments 11 et 12 constitue non seulement un élément mobile mais aussi un organe directement soumis à une usure U par frottement sur le tambour, les positions de repos et d'éloignement extrême de ces segments sont séparées l'une de l'autre par une distance qui croît avec leur usure U.

En plus du ressort de rappel 2, le dispositif de l'invention comprend une pièce de liaison 3 à relaxation d'effort, qui est montée en série avec le ressort de rappel 2 entre les deux segments 11 et 12.

Cette pièce 3 présente une longueur utile L qui croît avec l'usure U des segments 11 et 12.

Plus précisément, la longueur utile L de cette pièce de liaison 3 subit un accroissement à chaque fois que la force élastique de rappel F exercée par le ressort 2 dépasse un seuil d'effort prédéterminé F1.

Dans sa forme d'exécution préférée, cette pièce de liaison 3 est formée par un fil ressort replié en épingle à cheveux pour faire apparaître deux branches en vis-à-vis 31 et 32, entre lesquelles est défini un guide allongé 30 s'étendant suivant la direction X joignant les segments 11 et 12.

Une extrémité 21 du ressort de rappel 2, par exemple conformée en crochet, est emprisonnée dans le guide allongé 30, lequel est doté d'une succession d'obstacles 35 saillant transversalement par rapport à la direction X.

Les obstacles 35 sont par exemple formés par des ondulations des branches 31 et 32, qui se rapprochent et s'éloignent les unes des autres de façon coordonnée, ou simplement formés par des ondulations de l'une seulement de ces branches, dont l'autre peut être rectiligne.

Dans les deux cas, les obstacles 35 sont inclinés au moins localement par rapport à la direction X et agissent ainsi élastiquement à la manière de cliquets passants, en raison de l'élasticité de la pince que forment ensemble les branches 31 et 32.

Lorsque les segments 11 et 12 sont dans leur position de repos, le ressort de rappel 2, qui est précontraint, exerce sur eux une force de rappel minimale F0 (figure 5).

Lorsque le frein est actionné et que les segments 11 et 12 sont éloignés l'un de l'autre pour être rapprochés du tambour, la force de rappel F du ressort 2 augmente suivant une pente essentiellement définie par la raideur de ce ressort.

Au fur et à mesure que l'usure U augmente, la force de rappel F exercée par le ressort 2 sur les segments 11 et 12 dans leur position d'éloignement extrême augmente également.

Lorsque l'usure U atteint une valeur incrémentale Uincr, cette force de rappel dépasse un seuil d'effort prédéterminé F1.

Dans ces conditions, l'extrémité 21 du ressort de rappel 2 applique sur les obstacles inclinés 35 qui la bloquent dans le guide 30 une force telle que la pince élastique formée par les branches 31 et 32 s'ouvre.

L'extrémité 21 du ressort 2 échappe alors aux obstacles 35 qui la retenaient et vient au contact des obstacles 35 suivants dans le sens de l'allongement de la longueur utile L de la pièce 3, cet allongement provoquant immédiatement une réduction de la contrainte du ressort 2.

L'homme de métier comprendra que l'extrémité 21 du ressort 2 progresse ainsi dans le guide 30 par sauts successifs des obstacles élastiques 35, à mesure qu'augmente l'usure U des segments 11 et 12.

Dans les modes de réalisation illustrés aux figures 3 et 4, la pièce de liaison 3 est, à son extrémité 301, conformée en crochet pour lui permettre de s'accrocher à l'un des segments, par exemple au segment 11, tandis que le fil ressort qui la constitue est replié sur lui-même à l'autre extrémité 302 de cette même pièce de liaison 3.

Au lieu de prévoir que le guide 30 présente une largeur constante comme c'est le cas pour le mode de réalisation de la figure 3, il est possible de faire en sorte que ce guide présente une largeur évolutive, comme illustré sur là figure 4, pour rendre aussi constant que possible le seuil d'effort prédéterminé F1.

Dans ce cas, les ondulations des deux branches 31 et 32 présentent entre elles des distances minimales telles que D1 et D2 qui croissent depuis l'extrémité 301 conformée en crochet de la pièce de liaison 3 vers l'extrémité 302 de cette même pièce qui est repliée en épingle à cheveux.

## Revendications

1. Dispositif de rappel entre deux éléments (11, 12) mobiles l'un par rapport à l'autre et sélectivement déplacés, suivant un mouvement d'éloignement mutuel, depuis une position de repos vers une position d'éloignement extrême, les positions de repos et d'éloignement extrême étant séparées l'une de l'autre par une distance croissante avec l'usure (U) d'au moins un organe d'usure et ce dispositif comprenant au moins un ressort de rappel (2) reliant les deux éléments mobiles (11, 12) et exerçant sur ces éléments, dans leur position d'éloignement extrême, une force élastique de rappel (F) les sollicitant en rapprochement mutuel vers leur position de repos, **caractérisé en ce qu'**il comprend en outre une pièce de liaison (3) à relaxation d'effort, montée en série avec le ressort de rappel (2) entre les deux éléments mobiles (11, 12), et présentant une longueur utile (L) croissante avec l'usure (U) de chaque organe d'usure, cette pièce de liaison (3) subissant un accroissement de sa longueur utile (L) en réponse à un dépassement, par la force élastique de rappel (F), d'un seuil d'effort prédéterminé (F1).

2. Dispositif de rappel suivant la revendication 1, **caractérisé en ce que** la pièce de liaison (3) comprend un guide allongé (30) suivant une première direction (X) joignant les éléments mobiles (11, 12), **en ce que** le ressort de rappel (2) présente une première extrémité (21) emprisonnée dans le guide allongé (30), et **en ce que** ce guide (30) est doté d'une succession d'obstacles élastiques (35) saillant transversalement à la première direction (X), au moins localement inclinés par rapport à cette première direction, et agissant à la manière de cliquets passants, la première extrémité (21) du ressort de rappel (2) progressant dans le guide (30) par sauts successifs des obstacles élastiques (35) à mesure qu'augmente l'usure (U) de chaque organe d'usure.

3. Dispositif de rappel suivant la revendication 2, **caractérisé en ce que** la pièce de liaison (3) est formée par un fil ressort replié en épingle à cheveux pour faire apparaître deux branches (31, 32) en vis-à-vis, et **en ce que** les obstacles élastiques (31, 32) sont formés par des ondulations de l'une au moins de ces deux branches (31,32).

4. Dispositif de rappel suivant l'une quelconque des revendications précédentes, **caractérisé en ce que** la pièce de liaison (3) présente une première extrémité (301) conformée en crochet et accrochée à l'un des éléments mobiles (11).

5. Dispositif de rappel suivant l'une quelconque des revendications précédentes combinée à la revendication 2, **caractérisé en ce que** la première extrémité (21) du ressort de rappel (2) est conformée en crochet.

6. Dispositif de rappel suivant l'une quelconque des revendications précédentes combinée à la revendication 3, **caractérisé en ce que** les deux branches (31, 32) de la pièce de liaison (3) portent des ondulations, et **en ce que** les obstacles élastiques (35) sont formés par rapprochement et éloignement mutuels et coordonnés des ondulations de ces deux branches (31, 32).

7. Dispositif de rappel suivant l'une quelconque des revendications précédentes combinée aux revendications 3 et 4, **caractérisé en ce que** le fil ressort est replié sur lui-même à une seconde extrémité (302) de la pièce de liaison (3), opposée à la première extrémité (301) de cette pièce de liaison (3).

8. Dispositif de rappel suivant les revendications 6 et 7, **caractérisé en ce que** les ondulations des deux branches (31, 32) présentent entre elles des distances minimales croissantes (D1, D2) depuis la première extrémité (301) de la pièce de liaison (3) vers la deuxième extrémité (302) de cette pièce de liaison.

9. Application d'un dispositif de rappel suivant l'une quelconque des revendications précédentes à un frein à tambour équipé de deux segments, **caractérisé en ce que** chaque segment (11, 12) constitue à la fois un élément mobiles et un organe d'usure.

## Claims

1. Return device between two elements (11, 12) which can move relative to one another and are selectively displaced, with a mutual parting movement, from a rest position towards a parted end position, the rest and parted end positions being separated from one another by a distance which increases with the wear (U) on at least one wear part and this device comprising at least one return spring (2) connecting the two moving elements (11, 12) and exerting on these elements, in their parted end position, an elastic return force (F) urging them to come together towards their rest position, **characterized in that** it additionally comprises a load-relieving connecting piece (3) mounted in series with the return spring (2) between the two moving elements (11, 12) and having a useful length (L) which increases with the wear (U) on each wear part, this connecting piece (3) experiencing an increase in its useful length (L) in response to the elastic return force (F) exceeding a predetermined load threshold (F1) .

2. Return device according to Claim 1, **characterized in that** the connecting piece (3) comprises an elongate guide (30), elongated in a first direction (X), joining the moving elements (11, 12), **in that** the return spring (2) has a first end (21) clamped in the elongate guide (30), and **in that** this guide (30) is provided with a succession of elastic obstacles (35) projecting transversely to the first direction (X), at least locally inclined with respect to this first direction, and acting in the manner of running catches, the first end (21) of the return spring (2) progressing in the guide (30) by successive jumps of the elastic obstacles (35) as the wear (U) on each wear part increases.

3. Return device according to Claim 2, **characterized in that** the connecting piece (3) is formed by a spring wire folded in the manner of a hairpin so as to present two opposite branches (31, 32), and **in that** the elastic obstacles (31, 32) are formed by undulations of at least one of these two branches (31, 32).

4. Return device according to any one of the preceding claims, **characterized in that** the connecting piece (3) has a hook-shaped first end (301) attached to one of the moving elements (11).

5. Return device according to any one of the preceding claims combined with Claim 2, **characterized in that** the first end (21) of the return spring (2) is hook-shaped.

6. Return device according to any one of the preceding claims combined with Claim 3, **characterized in that** the two branches (31, 32) of the connecting piece (3) bear undulations, and **in that** the elastic obstacles (35) are formed by the undulations of these two branches (31, 32) converging and diverging in a coordinated manner.

7. Return device according to any one of the preceding claims combined with Claims 3 and 4, **characterized in that** the spring wire is folded over on itself at a second end (302) of the connecting piece (3), opposite the first end (301) of this connecting piece (3).

8. Return device according to Claims 6 and 7, **characterized in that** the undulations of the two branches (31, 32) have minimum distances (D1, D2) between them which increase from the first end (301) of the connecting piece (3) towards the second end (302) of this connecting piece.

9. Application of a return device according to any one of the preceding claims to a drum brake equipped with two shoes, **characterized in that** each shoe (11, 12) constitutes both a moving element and a wear part.

## Patentansprüche

1. Vorrichtung zum Zurückstellen zwischen zwei zueinander beweglichen Elementen (11, 12), die selektiv gemäß einer Bewegung, bei der sie voneinander entfernt werden, von einer Ruhestellung in eine voneinander entfernte Endstellung bewegt werden, wobei die Ruhestellung und die voneinander entfernte Endstellung durch einen Abstand voneinander getrennt sind, der mit dem Verschleiß (U) mindestens eines Verschleißorgans zunimmt, und wobei diese Vorrichtung mindestens eine Rückstellfeder (2) aufweist, die die beiden beweglichen Elemente (11, 12) verbindet und auf diese Elemente, in ihrer voneinander entfernten Endstellung, eine elastische Rückstellkraft (F) ausübt, durch die sie so beaufschlagt werden, dass sie sich aneinander nähern und ihre Ruhestellung erreichen, **dadurch gekennzeichnet, dass** sie ferner ein Verbindungsteil (3) mit Kraftrelaxation aufweist, das mit der Rückstellfeder (2) zwischen den beiden beweglichen Elementen (11, 12) in Reihe geschaltet ist und eine mit dem Verschleiß (U) jedes Verschleißorgans zunehmende Nutzlänge (L) aufweist, wobei die Nutzlänge (L) dieses Verbindungsteils (3) in Reaktion auf eine Überschreitung eines vorbestimmten Kraftschwellenwerts (F1) durch die elastische Rückstellkraft (F) zunimmt.

2. Rückstellvorrichtung nach Anspruch 1, **dadurch gekennzeichnet, dass** das Verbindungsteil (3) eine in eine erste Richtung (X) langgestreckte Führung (30) aufweist, die die beweglichen Elemente (11, 12) verbindet, die Rückstellfeder (2) ein erstes Ende (21) aufweist, das in der langgestreckten Führung (30) eingeschlossen ist, und diese Führung (30) mit einer Folge von elastischen Hindernissen (35) versehen ist, die quer zur ersten Richtung (X) hervorstehen, zumindest lokal in Bezug auf diese erste Richtung geneigt sind und wie durchlässige Rasten wirken, wobei das erste Ende (21) der Rückstellfeder (2) sich mit zunehmendem Verschleiß (U) jedes Verschleißorgans durch aufeinanderfolgende Sprünge der elastischen Hindernisse (35) in der Führung (30) fortbewegt.

3. Rückstellvorrichtung nach Anspruch 2, **dadurch gekennzeichnet, dass** das Verbindungsteil (3) durch einen Federdraht gebildet ist, der in Form einer Haarnadel umgebogen ist, um zwei gegenüberliegende Schenkel (31, 32) zu bilden, und die elastischen Hindernisse (31, 32) durch Wellen mindestens eines dieser beiden Schenkel (31, 32) gebildet sind.

4. Rückstellvorrichtung nach einem der vorhergehenden Ansprüche, **dadurch gekennzeichnet, dass** das Verbindungsteil (3) ein erstes Ende (301) aufweist, das als Haken ausgebildet und an einem der beweglichen Elemente (11) befestigt ist.

5. Rückstellvorrichtung nach einem der vorhergehenden Ansprüche in Kombination mit Anspruch 2, **dadurch gekennzeichnet, dass** das erste Ende (21) der Rückstellfeder (2) als Haken ausgebildet ist.

6. Rückstellvorrichtung nach einem der vorhergehenden Ansprüche in Kombination mit Anspruch 3, **dadurch gekennzeichnet, dass** die beiden Schenkel (31, 32) des Verbindungsteils (3) Wellen tragen und die elastischen Hindernisse (35) **dadurch** gebildet sind, dass sich die Wellen dieser beiden Schenkel (31, 32) koordiniert einander nähern und voneinander entfernen.

7. Rückstellvorrichtung nach einem der vorhergehenden Ansprüche in Kombination mit den Ansprüchen 3 und 4, **dadurch gekennzeichnet, dass** der Federdraht an einem zweiten Ende (302) des Verbindungsteils (3), das zum ersten Ende (301) dieses Verbindungsteils (3) entgegengesetzt ist, zu sich selbst umgebogen ist.

8. Rückstellvorrichtung nach den Ansprüchen 6 und 7, **dadurch gekennzeichnet, dass** zwischen den Wellen der beiden Schenkel (31, 32) minimale Abstände (D1, D2) bestehen, die von dem ersten Ende (301) des Verbindungsteils (3) zum zweiten Ende (302) dieses Verbindungsteils zunehmen.

9. Anwendung einer Rückstellvorrichtung nach einem der vorhergehenden Ansprüche bei einer mit zwei Segmenten versehenen Trommelbremse, **dadurch gekennzeichnet, dass** jedes Segment (11, 12) gleichzeitig ein bewegliches Element und ein Verschleißorgan bildet.
